# EUROPÄISCHE PATENTSCHRIFT

(11) **EP 3 274 387 B1**
(45) Veröffentlichungstag und Bekanntmachung des Hinweises auf die Patenterteilung: **23.02.2022**
(21) Anmeldenummer: 16712798.4
(22) Anmeldetag: 23.03.2016
(51) Int. Cl.: C08G 18/48, C08G 18/32

(54) **GEDÄCHTNISSCHAUM AUF DER BASIS VON THERMOPLASTISCHEM POLYURETHAN**
MEMORY FOAM BASED ON THERMOPLASTIC POLYURETHANE
MOUSSE À MÉMOIRE DE FORME À BASE DE POLYURÉTHANE THERMOPLASTIQUE

(30) Priorität: 27.03.2015 EP 15161351
(43) Veröffentlichungstag der Anmeldung: 31.01.2018
(73) Patentinhaber: BASF SE, 67056 Ludwigshafen am Rhein (DE)
(72) Erfinder: BOKERN, Stefan, 28209 Bremen (DE); PRISSOK, Frank, 49448 Lemförde (DE); HARTWIG, Sebastian, 48147 Münster (DE); PÖSELT, Elmar, 22359 Hamburg (DE); GOESCHEL, Julia, 28201 Bremen (DE); KEPPELER, Uwe, 67126 Hochdorf-Assenheim (DE)
(74) Vertreter: BASF IP Association
(86) Internationale Anmeldenummer: PCT/EP2016/056321
(87) Internationale Veröffentlichungsnummer: WO 2016/156133

(56) Entgegenhaltungen:
- JP-A- 2005 102 953
- US-A- 5 135 786
- US-A1- 2005 245 719
- US-A1- 2012 279 101

## Beschreibung

Die vorliegende Erfindung betrifft ein Verfahren zur Herstellung eines Formkörpers (FK) umfassend die Herstellung eines thermoplastischen Polyurethans umfassend die Umsetzung mindestens einer Polyisocyanatzusammensetzung, mindestens eines Kettenverlängerers und mindestens einer Polyolzusammensetzung, die Herstellung eines Formkörpers (FK*) aus dem thermoplastischen Polyurethan, das Erwärmen des Formkörpers (FK*) auf eine Temperatur unterhalb der Temperatur, bei der eine permanente Verformbarkeit des Formkörpers (FK*) gegeben ist, und oberhalb der Schalttemperatur des thermoplastischen Polyurethans, das Komprimieren des erwärmten Formkörpers (FK*) unter Erhalt eines Formkörpers (FK) und das Abkühlen des Formkörpers (FK) auf eine Temperatur unterhalb der Schalttemperatur des thermoplastischen Polyurethans, sowie die nach einem derartigen Verfahren erhaltenen oder erhältlichen Formkörper. Unter Schalttemperatur wird die Temperatur verstanden, bei der ein Phasenübergang unterhalb der Schmelztemperatur der Hartphase vorhanden ist. Dabei kann es sich um einen Glasübergang oder einen Schmelzübergang von teilkristallinen oder vollkristallinen Strukturen handeln. Weiter betrifft die vorliegende Erfindung die Verwendung eines thermoplastischen Polyurethans zur Herstellung eines Formkörpers mit Formgedächtnis-Effekt in einem Temperaturbereich von 20 °C bis 120 °C.

Thermoplastische Polyurethane für verschiedene Anwendungen sind aus dem Stand der Technik grundsätzlich bekannt. Durch die Variation der Einsatzstoffe können unterschiedliche Eigenschaftsprofile erhalten werden.

Auch thermoplastische Polyurethane, die einen Formgedächtnis-Effekt zeigen, sind an sich bekannt. Der Formgedächtnis-Effekt basiert meist auf einer Weichphasenkristallisation von Polyesterpolyolen. Die Polyurethane auf Basis von Polyesterpolyolen haben den Nachteil, nicht gegenüber Hydrolyse und aggressiven Chemikalien wie starken Säuren und Basen stabil zu sein, was die Anwendbarkeit stark einschränkt, beispielsweise für Außenanwendungen. Alternativ lässt sich der Formgedächtnis Effekt auch durch den Einsatz von Blends erzeugen. Diese sind aber aufwendig herzustellen und nicht phasenstabil. Ein weiterer Ansatz, um einen Formgedächtnis-Effekt zu erzielen, ist der Einsatz nanostrukturierter Polyole, die allerdings ebenfalls aufwendig zu synthetisieren sind.

JP 2005102953 beschreibt ein nicht thermoplastisches Formgedächtnis- Harz zur Anpassung von Zähnen, das spätere Korrekturen gestattet. Das Harz ist entweder Polyurethan-, Polyurethane-Harnstoff-, Polynorbornen-, t-Polyisopren- oder Styren-Butadien-basiert und weist eine Glasübergangstemperatur zwischen 40 und 100 °C (bevorzugt 60 bis 80 °C) auf.

Auch WO 2011/060970 bzw. die parallele US 20120279101 A1 offenbart ein Formgedächtnis-TPU auf Basis von Polyesterpolyolen. Diese sind nicht hydrolysestabil. Bisphenol-A basierte Verbindungen werden als Kettenverlängerer für die Hartphase verwendet. Diese zeigen als Kettenverlängerer in der Hartphase Nachteile in den mechanischen Eigenschaften.

US 7524914 B2 beschreibt die Herstellung eines Formgedächtnis-TPU durch die Verwendung eines Dihydroxyl-terminierten Polyhedral Oligosilsesquioxans. Dieses ist aufwendig herzustellen.

US 5 135 786 A offenbart die Herstellung eines thermoplastischen Polyurethans aus einem difunktionellen Polyol, einem Diisocyanat und einem difunktionellen Kettenverlängerer zur Herstellung eines Formkörpers, der einen Formgedächtnis-Effekt hat.

US 2005/245719 A1 offenbart die Herstellung eines Formgedächtnis-TPU durch die Verwendung eines Dihydroxyl-terminierten Polyhedral Oligosilsesquioxans.

EP 0 361 418 A2 offenbart die Herstellung eines Formgedächtnis-TPU-Schaums durch die Verwendung eines Diisocyanats, eines propoxylierten Bisphenol A und eines Kettenverlängerers.

Ausgehend vom Stand der Technik lag eine der vorliegenden Erfindung zugrunde liegende Aufgabe darin, ein thermoplastisches Polyurethan mit einem Formgedächtnis-Effekt zur Verfügung zu stellen, das gegenüber Chemikalien wie verdünnter Salzsäure stabil ist. Eine weitere Aufgabe der vorliegenden Erfindung lag darin, ein thermoplastisches Polyurethan mit einem Formgedächtnis-Effekt zur Verfügung zu stellen, das gegenüber Chemikalien wie verdünnter Salzsäure stabil ist und das einfach und kostengünstig herzustellen ist. Eine weitere Aufgabe der vorliegenden Erfindung bestand darin, Materialien bereitzustellen, die als Isolationsmaterial eingesetzt werden können und an einen bestehenden Hohlraum einfach angepasst werden können.

Erfindungsgemäß wird diese Aufgabe gelöst durch ein Verfahren zur Herstellung eines Formkörpers (FK) umfassend die folgenden Schritte
(a) Herstellung eines thermoplastischen Polyurethans umfassend die Umsetzung
   (i) mindestens einer Polyisocyanatzusammensetzung;
   (ii) mindestens eines Kettenverlängerers; und
   (iii) mindestens einer Polyolzusammensetzung,
      wobei die Polyolzusammensetzung mindestens ein Bisphenol-Derivat umfasst, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist, und
      ein Polyol ausgewählt aus der Gruppe bestehend aus Polyetherolen, Polyesterolen, Polycarbonatalkoholen und Hybridpolyolen ;
(b) Herstellung eines Formkörpers (FK*) aus dem thermoplastischen Polyurethan,
(c) Erwärmen des Formkörpers (FK*) auf eine Temperatur unterhalb der Temperatur, bei der eine permanente Verformbarkeit des Formkörpers (FK*) gegeben ist, und oberhalb der Schalttemperatur des thermoplastischen Polyurethans,
(d) Komprimieren des erwärmten Formkörpers (FK*) unter Erhalt eines Formkörpers (FK),
(e) Abkühlen des Formkörpers (FK) auf eine Temperatur unterhalb der Schalttemperatur des thermoplastischen Polyurethans,
   wobei der Formkörper ein Schaum ist, und
   wobei der gemäß (ii) eingesetzte Kettenverlängerer ein Diol mit einem Molekulargewicht Mw < 220 g/mol ist.

Überraschenderweise wurde gefunden, dass durch das erfindungsgemäße Verfahren und die Verwendung eines thermoplastischen Polyurethan basierend auf Bisphenol-basierten Monomeren in Verbindung mit einem Polyol, Kettenverlängerer und Diisocyanat Formkörper erhalten werden, die einen Formgedächtnis-Effekt aufweisen.

Erfindungsgemäß ist das thermoplastische Polyurethan ein Schaum bzw. liegt in Form eines Schaums vor, beispielsweise ein Partikelschaum oder ein Extrusionsschaum. Demgemäß betrifft die vorliegende Erfindung gemäß einer weiteren Ausführungsform ein Verfahren wie zuvor beschrieben, wobei das thermoplastische Polyurethan ein Partikelschaum oder ein Extrusionsschaum ist. Die vorliegende Erfindung betrifft somit ein Verfahren wie zuvor beschrieben, wobei das thermoplastische Polyurethan in Form eines Partikelschaums oder eines Extrusionsschaums vorliegt.

Gemäß dem erfindungsgemäßen Verfahren wird zunächst der aus dem thermoplastischen Polyurethan hergestellte Formkörper (FK*) bei einer Temperatur oberhalb der Schalttemperatur komprimiert und im komprimierten Zustand auf eine Temperatur unterhalb der Schalttemperatur abgekühlt. Dabei wird ein Formkörper (FK) erhalten, der gegenüber dem Formkörper (FK*) gestaucht bzw. komprimiert ist und in diesem komprimierten Zustand stabil ist. Die verminderte Ausdehnung des Materials ist somit "eingefroren". Durch erneutes Erwärmen des Formkörpers (FK) auf eine Temperatur oberhalb der Schalttemperatur verformt sich das TPU bzw. der Formkörper sehr schnell auf seine ursprüngliche Größe, d.h. auf die Größe des nicht komprimierten Formkörpers (FK*) zurück. Hierbei kann prozessbedingt eine Reststauchung von bis zu 20 % zurückbleiben. Insbesondere Schäume eignen sich erfindungsgemäß, da die Ausdehnung des Formkörpers bei Erwärmen des Formkörpers (FK) auf eine Temperatur oberhalb der Schalttemperatur schnell und einfach erfolgt.

Das erfindungsgemäße Verfahren umfasst die Schritte (a) bis (e). Dabei wird zunächst gemäß Schritt (a) ein thermoplastisches Polyurethan durch Umsetzung mindestens einer Polyisocyanatzusammensetzung, mindestens eines Kettenverlängerers und mindestens einer Polyolzusammensetzung hergestellt. Dabei umfasst die Polyolzusammensetzung erfindungsgemäß mindestens ein Bisphenol-Derivat, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist und ein Polyol ausgewählt aus der Gruppe bestehend aus Polyetherolen, Polyesterolen, Polycarbonatalkoholen und Hybridpolyolen.

Gemäß einer bevorzugten Ausführungsform wird das Verfahren gemäß Schritt (a) unter erhöhten Temperaturen als Raumtemperatur durchgeführt, weiter bevorzugt im Bereich zwischen 50 °C und 200 °C, besonders bevorzugt im Bereich von 65 °C und 150 °C, insbesondere im Bereich von 75 °C und 120 °C.

Das Erwärmen kann erfindungsgemäß auf jede dem Fachmann bekannte geeignete Art erfolgen. Vorzugsweise durch elektrisches Beheizen, Beheizen über erhitztes Öl oder Wasser, Induktionsfelder, Warmluft oder IR-Strahlung.

Gemäß Schritt (b) wird aus dem gemäß Schritt (a) erhaltenen thermoplastischen Polyurethan ein Formkörper (FK*) hergestellt. Der Formkörper (FK*) kann dabei im Rahmen der vorliegenden Erfindung beispielsweise auch ein Schaum oder eine Folie sein. Dabei kann die Herstellung des Formkörpers (FK*) im Rahmen der vorliegenden Erfindung auf alle üblichen Arten erfolgen, beispielsweise durch Extrusion, Spritzguss oder Sinterverfahren. Erfindungsgemäß ist es auch möglich, dass das Verfahren zur Herstellung des Formkörpers weitere Schritte, beispielsweise geeignete Schritte zur Herstellung eines Schaums umfasst.

Gemäß Schritt (c) des erfindungsgemäßen Verfahrens wird der Formkörper (FK*) auf eine Temperatur unterhalb der Temperatur, bei der eine permanente Verformbarkeit des Formkörpers (FK*) gegeben ist, beispielsweise also auf eine Temperatur unterhalb des Schmelzpunktes, und oberhalb der Schalttemperatur des thermoplastischen Polyurethans erwärmt.

Gemäß einer weiteren Ausführungsform betrifft die vorliegende Erfindung demgemäß ein Verfahren wie zuvor beschrieben, wobei der Beginn der permanenten Verformbarkeit dem Beginn des Schmelzens der Hartphase des thermoplastischen Polyurethans entspricht, und die Schalttemperatur dem Beginn des in der Temperatur am höchsten liegenden Phasenüberganges vor dem Schmelzbereich entspricht.

Geeignete thermoplastische Polyurethane weisen beispielsweise eine Schmelztemperatur im Bereich von 130 bis 250 °C auf, bevorzugt im Bereich von 160 bis 220 °C.

Geeignete thermoplastische Polyurethane weisen beispielsweise eine Schalttemperatur im Bereich von 0 bis 120 °C auf, bevorzugt im Bereich von 20 bis 100 °C, besonders bevorzugt im Bereich von 30 bis 80 °C.

Gemäß einer weiteren Ausführungsform betrifft die vorliegende Erfindung demgemäß ein Verfahren wie zuvor beschrieben, wobei die Schalttemperatur des thermoplastischen Polyurethans (T_{schalt}) im Bereich von 0 bis 120 °C liegt.

Das Erwärmen kann erfindungsgemäß auf jede dem Fachmann bekannte geeignete Art erfolgen. Vorzugsweise erfolgt das Erwärmen durch elektrisches Beheizen, Beheizen über erhitztes Öl oder Wasser, Induktionsfelder, Warmluft, IR-Strahlung oder energiereiche Strahlung (Laser).

Der gemäß Schritt (c) des erfindungsgemäßen Verfahrens erwärmte Formkörper (FK*) wird dann gemäß Schritt (d) des Verfahrens komprimiert. Erfindungsgemäß kann der Formkörper in einer, zwei oder drei Dimensionen komprimiert werden. Nach dem Komprimieren ist die Ausdehnung des Formkörpers in mindestens einer Dimension kleiner als vor dem Komprimieren. Dabei beträgt die Ausdehnung des gemäß Schritt (d) erhaltenen Formkörpers (FK) vorzugsweise in mindestens einer Dimension höchstens 75 % der Ausdehnung des Formkörpers (FK*), weiter bevorzugt höchstens 50 % der Ausdehnung des Formkörpers (FK*). Bevorzugt wird der Formkörper in mindestens einer Dimension komprimiert und es erfolgt keine Ausdehnung in einer anderen Dimension.

Gemäß einer weiteren Ausführungsform betrifft die vorliegende Erfindung demgemäß ein Verfahren wie zuvor beschrieben, wobei die Ausdehnung des gemäß Schritt (d) erhaltenen Formkörpers (FK) in mindestens einer Dimension höchstens 75 % der Ausdehnung des Formkörpers (FK*) beträgt.

Gemäß Schritt (e) wird der komprimierte Formkörper (FK) dann auf eine Temperatur unterhalb der Schalttemperatur des thermoplastischen Polyurethans abgekühlt. Dabei bleibt erfindungsgemäß die Ausdehnung des Formkörpers (FK) im Wesentlichen konstant. Erfindungsgemäß tritt nach Abkühlen und Spannungsentlastung gemäß Schritt (e) eine unmittelbare geringfügige Ausdehnung von weniger als 15 % oder keine Dehnung bei im Wesentlichen offenzelligen oder hochdichten FK auf; bei geschlossenzelligen, niederdichten (<200g/l) kann die Ausdehnung auf bis zu 50 % anwachsen.

Es wurde gefunden, dass ein nach einem erfindungsgemäßen Verfahren erhaltener Formkörper (FK) einen Formgedächtnis-Effekt aufweist. Erfindungsgemäß wird dies durch die spezielle Verfahrensführung in Kombination mit dem erfindungsgemäß eingesetzten thermoplastischen Polyurethan erreicht.

So kann erfindungsgemäß die Ausdehnung des erhaltenen Formkörpers (FK) beim Abkühlen auf Temperaturen unterhalb der Schalttemperatur im Wesentlichen konstant bleiben und bei einer nachfolgenden Erwärmung oberhalb des Glasüberganges um mindestens 20 % expandiert, d.h. der Formkörper dehnt sich aus. Die Ausdehnung relaxiert bei der Erwärmung auf eine Temperatur oberhalb der Schalttemperatur maximal auf die ursprüngliche Ausdehnung.

Es ist im Rahmen der vorliegenden Erfindung wesentlich, dass bei der Herstellung des thermoplastischen Polyurethans gemäß Schritt (a) mindestens ein Kettenverlängerer und die Polyolzusammensetzung wie zuvor beschrieben eingesetzt werden. Dabei enthält die Polyolzusammensetzung neben dem mindestens einen Bisphenol-Derivat weitere Polyole. Dementsprechend können im Rahmen der vorliegenden Erfindung auch mindestens ein Kettenverlängerer und eine Polyolzusammensetzung umfassend mindestens ein Bisphenol-A-Derivaten wie zuvor beschrieben und mindestens ein weiteres Polyol eingesetzt werden.

Erfindungsgemäß kann ein Kettenverlängerer eingesetzt werden, es können jedoch auch Mischungen verschiedener Kettenverlängerer eingesetzt werden. Erfindungsgemäß ist der gemäß (ii) eingesetzte Kettenverlängerer ein Diol mit einem Molekulargewicht Mw < 220 g/mol.

Als weitere Kettenverlängerer können im Rahmen der vorliegenden Erfindung beispielsweise Verbindungen mit Hydroxyl- oder Amino-Gruppen eingesetzt werden, insbesondere mit 2 Hydroxyl- oder Amino-Gruppen. Erfindungsgemäß ist es jedoch auch möglich, dass Gemische verschiedener Verbindungen als Kettenverlängerer eingesetzt werden. Dabei ist erfindungsgemäß die mittlere Funktionalität der Mischung 2.

Erfindungsgemäß bevorzugt werden als Kettenverlängerer Verbindungen mit Hydroxylgruppen eingesetzt, insbesondere Diole. Dabei können bevorzugt aliphatische, araliphatische, aromatische und/oder cycloaliphatische Diole mit einem Molekulargewicht von 50 g/mol bis 220 g/mol eingesetzt werden. Bevorzugt sind Alkandiole mit 2 bis 10 C-Atomen im Alkylenrest, insbesondere Di-, Tri-, Tetra-, Penta-, Hexa-, Hepta-, Okta-, Nona- und/oder Dekaalkylenglykole. Für die vorliegende Erfindung sind besonders bevorzugt 1,2-Ethylenglykol, 1,3-Propandiol, 1,4-Butandiol, 1,6-Hexandiol. Auch aromatische Verbindungen wie Hydroxychinon(bis(2-hydroxyethyl))ether können eingesetzt werden.

Erfindungsgemäß können auch Verbindungen mit Amino-Gruppen eingesetzt werden, beispielsweise Diamine. Ebenso können Gemische von Diolen und Diaminen eingesetzt werden.

Erfindungsgemäß ist es möglich, dass lediglich ein Diol mit einem Molekulargewicht Mw < 220 g/mol zur Herstellung des transparenten, thermoplastischen Polyurethans eingesetzt wird.

Gemäß einer weiteren Ausführungsform werden mehr als ein Diol als Kettenverlängerer eingesetzt. Es können somit auch Mischungen von Kettenverlängerern eingesetzt werden, wobei mindestens ein Diol ein Molekulargewicht Mw < 220 g/mol aufweist. Werden mehr als ein Kettenverlängerer eingesetzt, so kann das zweite oder weitere Kettenverlängerer auch ein Molekulargewicht ≥ 220 g/mol aufweisen.

Gemäß einer weiteren Ausführungsform ist der Kettenverlängerer ausgewählt aus der Gruppe bestehend aus 1,4-Butandiol und 1,6-Hexandiol.

Der Kettenverlängerer, insbesondere das Diol mit einem Molekulargewicht Mw < 220 g/mol, wird vorzugsweise in einem molaren Verhältnis im Bereich von 40:1 bis 1:10 zu dem Bisphenol-Derivat eingesetzt. Bevorzugt werden der Kettenverlängerer und das Bisphenol-Derivat in einem molaren Verhältnis im Bereich von 20:1 bis 1:9 eingesetzt, weiter bevorzugt im Bereich von 10:1 bis 1:8,5, beispielsweise im Bereich von 5:1 bis 1:5, oder auch im Bereich von 4:1 bis 1:1, weiter bevorzugt im Bereich von 3:1 bis 2:1.

Gemäß einer weiteren Ausführungsform betrifft die vorliegende Erfindung demgemäß ein Verfahren wie zuvor beschrieben, wobei der gemäß (i) eingesetzte Kettenverlängerer und das in der Polyolzusammensetzung enthaltene Bisphenol-Derivat in einem molaren Verhältnis von 40 zu 1 bis 1 zu 10 eingesetzt werden.

Erfindungsgemäß umfasst die Polyolzusammensetzung mindestens ein Bisphenol-Derivat, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist. Erfindungsgemäß ist es auch möglich, dass die Polyolzusammensetzung zwei oder mehr Bisphenol Derivate, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist, umfasst.

Gemäß einer bevorzugten Ausführungsform der vorliegenden Erfindung weist das mindestens eine Bisphenol-Derivat nur primäre OH-Gruppen aus. Somit weist gemäß dieser Ausführungsform das mindestens eine Bisphenol-Derivat keine phenolischen oder aromatischen OH-Gruppen auf.

Erfindungsgemäß ist mindestens eine der OH-Gruppen des Bisphenol-Derivats alkoxyliert. Gemäß einer bevorzugten Ausführungsform der vorliegenden Erfindung sind beide OH-Gruppen des Bisphenol-Derivats alkoxyliert. Es hat sich überraschenderweise gezeigt, dass durch die erfindungsgemäße Kombination von Polyolen bzw. den Einsatz von Bisphenol-Derivaten, bei denen mindestens eine der OH-Gruppen alkoxyliert ist, bevorzugt beide OH-Gruppen alkoxyliert sind, und bei denen bevorzugt somit keine aromatischen OH-Gruppen vorliegen, die erfindungsgemäßen Formgedächtnis-Eigenschaften des resultierenden thermoplastischen Polyurethans erhalten werden.

Gemäß einer weiteren Ausführungsform der vorliegenden Erfindung sind beide OH-Gruppen des Bisphenol-Derivats alkoxyliert. Alkoxyliert gemäß der vorliegenden Erfindung bedeutet, dass in die chemische Bindung zwischen aromatischen Ring des Bisphenol-Derivats und der Hydroxylgruppe (-OH) eine Alkoxylgruppe (-O-R- mit R = Alkylenerest) eingebaut wird. Gemäß einer Ausführungsform sind dabei die beiden OH-Gruppen am Bisphenol-Derivat mit derselben Alkoxylgruppe alkoxyliert. Dabei ist es beispielsweise möglich, dass die OH-Gruppen mit Ethoxyl-(-O-C₂H₄-), Propoxyl-(-O-C₃H₆-), Butoxyl-(-O-C₄H₈-), Pentoxyl- (-O-C₅H₁₀-) oder Hexoxylgruppen (-O-C₆H₁₂-) alkoxyliert sind.

Gemäß einer weiteren Ausführungsform der vorliegenden Erfindung sind beide OH-Gruppen des Bisphenol-Derivats mit unterschiedlichen Alkoxylgruppen (-O-R- mit R = Alkylenerest) alkoxyliert. Gemäß einer bevorzugten Ausführungsform sind die beiden OH-Gruppen des Bisphenol-Derivats mit zwei unterschiedlichen Resten ausgewählt aus der Gruppe bestehend aus Ethoxyl- (-O-C₂H₄-), Propoxyl- (-O-C₃H₆-), Butoxyl- (-O-C₄H₈-), Pentoxyl- (-O-C₅H₁₀-) oder Hexoxylrest (-O-C₆H₁₂-) alkoxyliert.

Erfindungsgemäß kann der Alkoxylrest eine oder auch mehrere Alkoxy-Gruppen aufweisen. Gemäß einer bevorzugten Ausführungsform der vorliegenden Erfindung wird ein Bisphenol-Derivat eingesetzt, wobei mindestens eine der OH-Gruppen des Bisphenol-Derivats alkoxyliert ist, und der mindestens eine Alkoxylrest ein Molekulargewicht von > 40 g/mol aufweist, bevorzugt > 60 g/mol, weiter bevorzugt > 120 g/mol, insbesondere > 180 g/mol, beispielsweise > 250 g/mol oder auch > 300 g/mol.

Gemäß einer weiter bevorzugten Ausführungsform der vorliegenden Erfindung wird ein Bisphenol-Derivat eingesetzt, wobei beide OH-Gruppen des Bisphenol-Derivats alkoxyliert sind, und die zwei Alkoxylreste gleich oder unterschiedlich sein können und unabhängig voneinander ein Molekulargewicht von > 40 g/mol, bevorzugt > 60 g/mol, weiter bevorzugt > 120 g/mol, insbesondere > 180 g/mol, beispielsweise > 250 g/mol oder auch > 300 g/mol aufweisen.

Erfindungsgemäß ist das Bisphenol-Derivat ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist. Weiter bevorzugt sind Bisphenol-A-Derivate oder Bisphenol-S-Derivate mit einem Molekulargewicht Mw > 400 g/mol weiter bevorzugt einem Molekulargewicht Mw > 450 g/mol, insbesondere einem Molekulargewicht Mw > 500 g/mol, besonders bevorzugt einem Molekulargewicht Mw > 550 g/mol, beispielsweise einem Molekulargewicht Mw > 600 g/mol.

Gemäß einer Ausführungsform betrifft die vorliegende Erfindung ein wie zuvor beschriebenes thermoplastisches Polyurethan, wobei das mindestens eine Bisphenol-Derivat nur primäre OH-Gruppen aufweist.

Erfindungsgemäß geeignet ist beispielsweise ein Bisphenol-Derivat, das die folgende allgemeine Formel (I) aufweist: 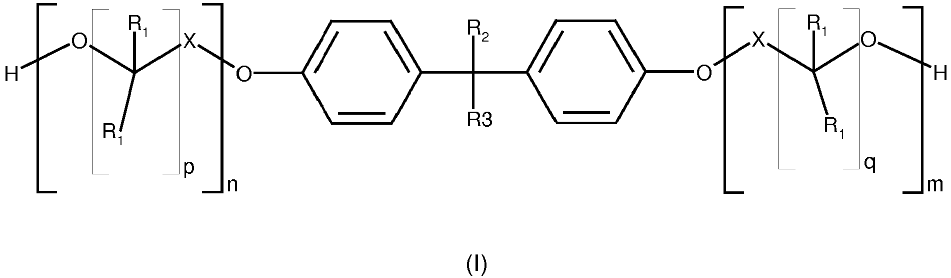 wobei
R1 jeweils unabhängig voneinander eine Methylgruppe oder H ist,
R2 und R3 eine Methylgruppe sind oder
R2 -C- R3 zusammen O=S=O sind,
X eine -C(R1)₂-, -C(R1)₂-C(R1)₂- oder -C(R1)₂-C(R1)₂-C(R1)₂- -Gruppe darstellt,
p und q unabhängig voneinander eine ganze Zahl von 1 bis 4 sind, und
n und m unabhängig voneinander eine ganze Zahl > 0 sind.

Demgemäß kann das Bisphenol-Derivat die Formel (la), wobei R2 und R3 eine Methylgruppe sind oder (Ib), wobei R2 -C- R3 zusammen O=S=O sind, aufweisen: 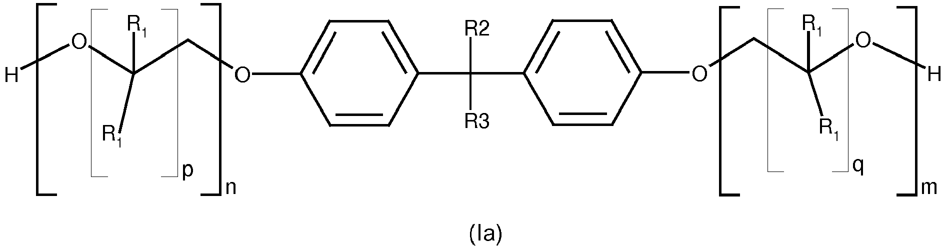 wobei
R1 jeweils unabhängig voneinander eine Methylgruppe oder H ist,
R2 und R3 eine Methylgruppe sind,
X eine -C(R1)₂-, -C(R1)₂-C(R1)₂- oder -C(R1)₂-C(R1)₂-C(R1)₂- -Gruppe darstellt,
p und q unabhängig voneinander eine ganze Zahl von 1 bis 4 sind, und
n und m unabhängig voneinander eine ganze Zahl > 0 sind;
oder 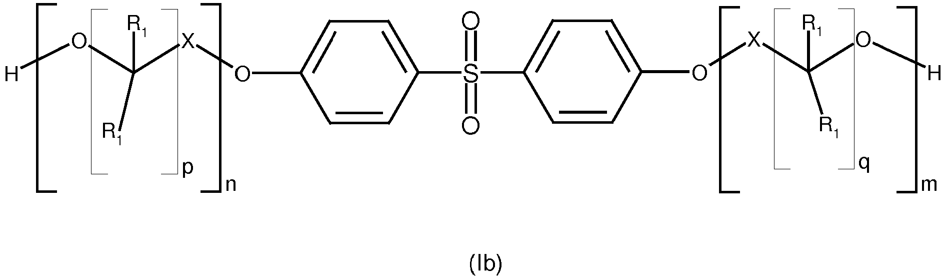 wobei
R1 jeweils unabhängig voneinander eine Methylgruppe oder H ist,
R2 -C- R3 zusammen O=S=O sind,
X eine -C(R1)₂-, -C(R1)₂-C(R1)₂- oder -C(R1)₂-C(R1)₂-C(R1)₂- -Gruppe darstellt,
p und q unabhängig voneinander eine ganze Zahl von 1 bis 4 sind, und
n und m unabhängig voneinander eine ganze Zahl > 0 sind.

Gemäß einer bevorzugten Ausführungsform ist der Alkoxylrest jeweils ein Ethoxylrest, d.h. gemäß einer bevorzugten Ausführungsform weist das mindestens eine Bisphenol-Derivat die allgemeine Formel (II) auf: 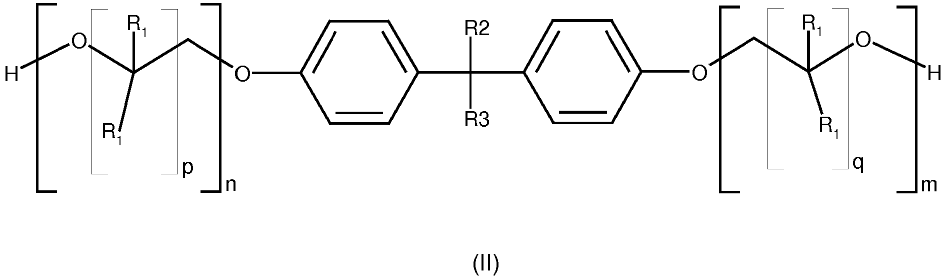 wobei
R1 jeweils unabhängig voneinander eine Methylgruppe oder H ist,
R2 und R3 eine Methylgruppe sind oder
R2 -C- R3 zusammen O=S=O sind,
p und q unabhängig voneinander eine ganze Zahl von 1 bis 4 sind, und
n und m unabhängig voneinander eine ganze Zahl > 0 sind.

Gemäß einer weiteren Ausführungsform betrifft die vorliegende Erfindung demgemäß ein Verfahren wie zuvor beschrieben, wobei das mindestens eine Bisphenol-Derivat die folgende allgemeine Formel (I) aufweist: 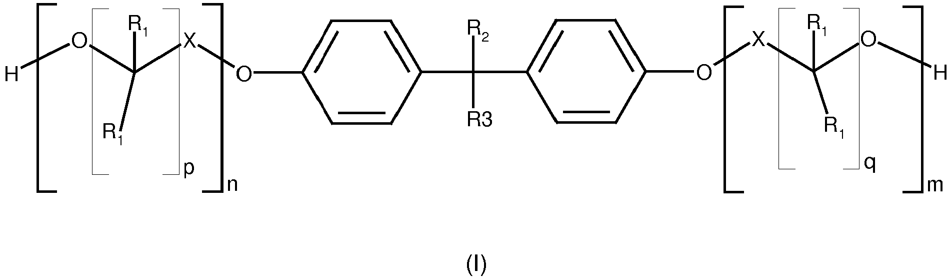 wobei
R1 jeweils unabhängig voneinander eine Methylgruppe oder H ist,
R2 und R3 eine Methylgruppe sind oder
R2 -C- R3 zusammen O=S=O sind,
X eine -C(R1)₂-, -C(R1)₂-C(R1)₂- oder -C(R1)₂-C(R1)₂-C(R1)₂- -Gruppe darstellt,
p und q unabhängig voneinander eine ganze Zahl von 1 bis 4 sind, und
n und m unabhängig voneinander eine ganze Zahl > 0 sind.

Gemäß einer weiteren Ausführungsform betrifft die vorliegende Erfindung auch ein Verfahren wie zuvor beschrieben, wobei das mindestens eine Bisphenol-Derivat nur primäre OH-Gruppen aufweist.

Gemäß einer bevorzugten Ausführungsform ist R1 Wasserstoff, d.h. die Verbindung der Formel (I) bzw. (la), (Ib) oder (II) weist vorzugsweise endständig primäre Alkoholgruppen auf.

Neben dem mindestens einen Bisphenol-Derivat umfasst die Polyolzusammensetzung erfindungsgemäß weitere Polyole. Erfindungsgemäß umfasst die Polyolzusammensetzung ein Polyol ausgewählt aus der Gruppe bestehend aus Polyetherolen, Polyesterolen, Polycarbonatalkoholen und Hybridpolyolen.

Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden Polyesterole oder Polyetherole als Polyole eingesetzt. Ebenso können Polycarbonate eingesetzt werden. Auch Copolymere können im Rahmen der vorliegenden Erfindung eingesetzt werden. Das zahlenmittlere Molekulargewicht der erfindungsgemäß eingesetzten Polyole liegen vorzugsweise zwischen 0,5×10³g/mol und 8 ×10³ g/mol, bevorzugt zwischen 0,6 ×10³ g/mol und 5 ×10³ g/mol, insbesondere zwischen 0,8 ×10³ g/mol und 3 ×10³ g/mol. Bevorzugte Polyetherole sind erfindungsgemäß Polyethyleneglykole, Polypropylenglykole und Polytetrahydrofurane.

Gemäß einer besonders bevorzugten Ausführungsform ist das Polyol ein Polytetrahydrofuran mit einem Molekulargewicht im Mn Bereich von 600 g/mol bis 2500 g/mol.

Erfindungsgemäß sind auch geeignet Neben PTHF sind diverse weitere Polyether, aber auch Polyester, Blockcopolymere sowie Hybrid Polyole wie z.B. Poly(ester/amid) verwendbar.

Bevorzugt haben die eingesetzten Polyole eine mittlerer Funktionalität zwischen 1,8 und 2,3, bevorzugt zwischen 1,9 und 2,2, insbesondere 2. Bevorzugt weisen die erfindungsgemäß eingesetzten Polyole nur primäre Hydroxylgruppen auf.

Erfindungsgemäß kann das Polyol in reiner Form oder in Form einer Zusammensetzung enthaltend das Polyol und mindestens ein Lösungsmittel eingesetzt werden. Geeignete Lösungsmittel sind dem Fachmann an sich bekannt.

Das zusätzliche Polyol wird vorzugsweise in einem molaren Verhältnis im Bereich von 40:1 bis 1:10 zu dem Bisphenol-Derivat eingesetzt wird. In weiter bevorzugten Ausführungsformen werden das Polyol und das Bisphenol-Derivat in einem molaren Verhältnis im Bereich von 30:1 bis 1:9 eingesetzt, weiter bevorzugt im Bereich von 20:1 bis 1:8,5, insbesondere im Bereich von 15:1 bis 1:5, besonders bevorzugt im Bereich von 10:1 bis 1:2, oder auch im Bereich von 7:1 bis 1:1,6.

Erfindungsgemäß wird mindestens ein Polyisocyanat eingesetzt. Erfindungsgemäß können auch Mischungen aus zwei oder mehr Polyisocyanaten eingesetzt werden.

Bevorzugte Polyisocyanate sind im Rahmen der vorliegenden Erfindung Diisocyanate, insbesondere aliphatische oder aromatische Diisocyanate, weiter bevorzugt aromatische Diisocyanate.

Gemäß einer weiteren Ausführungsform betrifft die vorliegende Erfindung demgemäß ein Verfahren wie zuvor beschrieben, wobei das Polyisocyanat ein aromatisches Diisocyanat ist.

Des Weiteren können im Rahmen der vorliegenden Erfindung vorreagierte Prepolymere als Isocyanatkomponenten eingesetzt werden, bei denen ein Teil der OH-Komponenten in einem vorgelagerten Reaktionsschritt mit einem Isocyanat zur Reaktion gebracht werden. Diese Prepolymere werden in einem nachfolgenden Schritt, der eigentlichen Polymerreaktion, mit den restlichen OH-Komponenten zur Reaktion gebracht und bilden dann das thermoplastische Polyurethan. Die Verwendung von Prepolymeren bietet die Möglichkeit, auch OH-Komponenten mit sekundären Alkoholgruppen zu verwenden.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trime-thylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'-und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI); insbesondere bevorzugt sind 4,4'-, 2,4'- und/oder 2,2'-Methylendicyclohexyldiisocyanat (H12MDI) und 1-Isocyanato-3,3,5-trimethyl-5-isocyanatomethyl-cyclohexan oder Mischungen davon.

Demgemäß betrifft die vorliegende Erfindung gemäß einer weiteren Ausführungsform ein wie zuvor beschriebenes Verfahren, wobei das Polyisocyanat ausgewählt ist aus der Gruppe bestehend aus 4,4'-, 2,4'- und/oder 2,2'-Methylendicyclohexyldiisocyanat (H12MDI), Hexamethylendiisocyanat (HDI) und 1-Isocyanato-3,3,5-trimethyl-5-isocyanatomethyl-cyclohexan (IPDI) oder Mischungen davon.

Geeignete aromatische Diisocyanate sind insbesondere 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3,'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethan-diisocyanat und/oder Phenylendiisocyanat.

Gemäß einer weiteren Ausführungsform betrifft die vorliegende Erfindung ein wie zuvor beschriebenes Verfahren, wobei das Polyisocyanat ein aliphatisches Diisocyanat ist.

Erfindungsgemäß kann das Polyisocyanat in reiner Form oder in Form einer Zusammensetzung enthaltend das Polyisocyanat und mindestens ein Lösungsmittel eingesetzt werden. Geeignete Lösungsmittel sind dem Fachmann bekannt. Geeignet sind beispielsweise nicht reaktive Lösungsmittel wie Ethylacetat, Methylethylketon und Kohlenwasserstoffe.

Erfindungsgemäß können bei der Umsetzung von dem mindestens einen aliphatischen Polyisocyanat; dem mindestens einen Kettenverlängerer; und der mindestens einen Polyolzusammensetzung weitere Einsatzstoffe zugesetzt werden, beispielsweise Katalysatoren oder Hilfs- und Zusatzstoffe.

Geeignete Hilfs- und Zusatzstoffe sind dem Fachmann an sich bekannt. Genannt seien beispielsweise oberflächenaktive Substanzen, Flammschutzmittel, Keimbildungsmittel, Oxidationsstabilisatoren, Antioxidantien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S103-113) entnommen werden.

Darüber hinaus können erfindungsgemäß Katalysatoren eingesetzt werden. Geeignete Katalysatoren sind ebenfalls grundsätzlich aus dem Stand der Technik bekannt. Geeignete Katalysatoren sind beispielsweise organische Metallverbindungen ausgewählt aus der Gruppe bestehend aus Zinn-, Titan-, Zirkonium-, Hafnium-, Bismut-, Zink-, Aluminium- und Eisenorganylen, wie beispielsweise Zinnorganylverbindungen, bevorzugt Zinndialkyle wie Zinn-II-isooctoat, Zinndioctoat, Dimethylzinn oder Diethylzinn, oder Zinnorganylverbindungen aliphatischer Carbonsäuren, bevorzugt Zinndiacetat, Zinndilaurat, Dibutylzinndiacetat, Dibutylzinndilaurat, Titansäureester, Bismuthverbindungen, wie Bismuthalkylverbindungen, bevorzugt Bismuthneodecanoat oder ähnliche, oder Eisenverbindungen, bevorzugt Eisen-(VI)-acetylacetonat.

Gemäß einer bevorzugten Ausführungsform werden die Katalysatoren ausgewählt aus Zinnverbindungen und Bismuthverbindungen, weiter bevorzugt Zinnalkylverbindungen oder Bismuthalkylverbindungen. Besonders geeignet sind die Zinn-II-isooctoat und Bismuthneodecanoat.

Die Katalysatoren werden üblicherweise in Mengen von 3 ppm bis 2000 ppm, bevorzugt 10 ppm bis 1000 ppm, weiter bevorzugt 20 ppm bis 500 ppm und am meisten bevorzugt von 30 pmm bis 300 ppm eingesetzt.

Erfindungsgemäß wird bevorzugt mindestens ein Treibmittel eingesetzt. Dabei ist es im Rahmen der vorliegenden Erfindung möglich, chemische oder physikalische Treibmittel einzusetzen oder Mischungen davon.

Als chemische Treibmittel werden dabei solche Substanzen eingesetzt, die bei der Herstellung des Schaums unter thermischer Zersetzung Gase abspalten, beispielsweise Hydrogencitrate, Hydrogencarbonate oder Azodicarbonamide, wie Celegoene^{®}, Tracel^{®}, Hydrocerol^{®}. Als physikalische Treibmittel werden dabei Substanzen, vorzugsweise nicht reagierende Flüssigkeiten, eingesetzt, die bei der Herstellung des Schaums verdampfen. Geeignet sind beispielsweise Butan oder Pentan. Besonders bevorzugt wird als Treibmittel eine Kombination aus Natriumhydrogencitrat und Natriumhydrogencarbonat eingesetzt. Die chemischen oder physikalischen Treibmittel werden bevorzugt in thermoplastischen Trägern, wie beispielsweise EVA (Ethylenvinylacetat) eingesetzt.

Erfindungsgemäß ist es ebenfalls möglich, dass verkapselte, physikalische Treibmittel eingesetzt werden, wie beispielsweise Treibmittel beladenes Polystyrol oder Styrolacrylnitrilpolymere (SAN). Bevorzugt werden beispielsweise treibmittelgefüllten Kunststoffhohlkörper eingesetzt.

Geeignete treibmittelgefüllte Kunststoffhohlkörper basieren vorzugsweise auf einem Kunststoff, welcher eine geringere Polarität als das eingesetzte thermoplastische Polyurethan aufweist. Vorzugsweise basieren sie auf Polystyrol oder Styrolacrylnitrilpolymeren (SAN). Beispielsweise werden als Treibmittel gefüllte Kunststoffhohlkörper sogenannte expandierbare Mikrospheren eingesetzt. Expandierbare Mikrospheren sind Mikrohohlkugeln, die aus einer dünnen Kunststoffhülle bevorzugt aus Polyacrylnitril oder Copolymere hiervon, bestehen. Diese Mikrohohlkugeln sind mit Gas oder leichtsiedenden Flüssigkeiten, bevorzugt mit Kohlenwasserstoffen, gefüllt. Durch die einwirkende Temperatur in der thermoplastischen Verarbeitung kommt es zu einer Erweichung der Kunststoffhülle und gleichzeitig zu einer Expansion des eingeschlossenen Gases. Hierdurch kommt es zu einer Expansion der Mikrospheren. Die Expansionsfähigkeit der Mikrospheren kann durch die Bestimmung der TMA-Dichte [kg/m³] beschrieben werden (Stare Thermal Analysis System Fa. Mettler Toledo; Heizrate 20 °C/min). Die TMA-Dichte ist hierbei die minimal erreichbare Dichte bei einer bestimmten Temperatur Tₘₐₓ unter Normaldruck, bevor die Mikrospheren kollabieren.

Die treibmittelgefüllten Kunststoffhohlkörper weisen bevorzugt einen Durchmesser zwischen 20 µm und 40 µm auf. Derartige treibmittelgefüllte Kunststoffhohlkörper sind beispielsweise erhältlich bei Akzo Nobel, Casco Products GmbH, Essen unter der Marke Expancel^{®}.

Durch die Verwendung von treibmittelgefüllten Kunststoffhohlkörpern mit einer TMA-Dichte von kleiner 10 kg/m³, bevorzugt von 2 - 10 kg/m³ und insbesondere bevorzugt von 2 - 7 kg/m³, in Pulverform oder Masterbatchform ist eine besonders feine Zellstruktur, eine Unterdrückung der Lunkerbildung und keine Bildung von Einfallstellen zu beobachten und zudem ist der Verarbeitungsbereich, beispielsweise bezüglich der Temperatur, deutlich größer, so dass Mikrospheren mit einer solchen TMA-Dichte besonders bevorzugt sind. Beispielsweise weisen geeignete treibmittelgefüllte Kunststoffhohlkörper eine bimodale Teilchengrößenverteilung auf. Dabei werden die Teilchengrößen so gewählt, dass eine möglichst optimale Raumausfüllung der expandierten Teilchen möglich ist und damit eine möglichst geringe Dichte des erhaltenen Schaums erhalten wird.

Der eingesetzte Gehalt an treibmittelgefüllten Kunststoffhohlkörpern in der Mischung ist abhängig von der angestrebten Dichte des expandierten thermoplastischen Polyurethans. Bevorzugt werden pro 100 Gew.-Teilen des zu expandierenden, das heißt zu schäumendem thermoplastischen Polyurethans, zwischen 1 Gew.-Teilen und 20 Gew.-Teilen, bevorzugt zwischen 2 Gew.-Teilen und 10 Gew.-Teilen der treibmittelgefüllten Kunststoffhohlkörper eingesetzt.

Zur Herstellung der Schäume werden das thermoplastische Polyurethan und die treibmittelgefüllten Kunststoffhohlkörper sowie gegebenenfalls das zusätzliche Treibmittel gemischt und zu den gewünschten Formkörpern verarbeitet. Dies kann beispielsweise mittels Spritzguss, Sintern oder mittels Extrusion erfolgen. Durch die Temperatur bei der thermoplastischen Verarbeitung kommt es zu einer Expansion der expandierbaren Mikrospheren und somit zur Ausbildung der expandierten TPU. Vorzugsweise wird die Schmelze kontinuierlich in die gewünschte Form gebracht und erstarrt bzw. rekristallisiert.

Erfindungsgemäß ist es auch möglich, dass das Polyurethan als Partikelschaum vorliegt. Schäume in Form von expandierten Schaumstoffpartikeln können beispielsweise durch das sogenannte Suspensions- oder Autoklav-Verfahren, d.h. durch Imprägnierung von Granulaten mit einem Treibmittel in wässriger Suspension in einem Druckkessel und anschließendem Entspannen erhalten werden, wie es beispielsweise in der EP 1979401 A1 beschrieben wird.

Bevorzugt beträgt die Schüttdichte der auf diese Weise erhältlichen, expandierten Partikel 10 bis 300 kg/m³. Das als Ausgangsmaterial eingesetzte kompakte thermoplastische Polyurethan kann als Granulat, Pulver, Grieß oder sonstiger Form eingesetzt werden. Zweckmäßigerweise wird ein zylinderförmiges oder rundes Granulat eingesetzt. Das sphärische Granulat hat einen bevorzugten mittleren Durchmesser von 0,2 bis 10 mm, insbesondere von 0,5 bis 5 mm. Beim zylinderförmigen Granulat beträgt die Länge bevorzugt 0,2 bis 10 mm, insbesondere 0,5 bis 5 mm. Das Granulat kann auch plättchenförmig geformt sein.

Beim Suspensionsverfahren wird üblicherweise absatzweise in einem Imprägnierbehälter, z.B. in einem Rührkesselreaktor, gearbeitet. In den Reaktor wird das TPU, z.B. als Granulat, eindosiert, außerdem Wasser bzw. ein anderes Suspensionsmedium, sowie das Treibmittel und ggf. ein Suspensionshilfsmittel. Als Suspensionshilfsmittel eignen sich wasserunlösliche anorganische Stabilisatoren, wie Tricalciumphosphat, Magnesiumpyrophosphat, Metallcarbonate; ferner Polyvinylalkohol und Tenside, wie Natriumdodecylarylsulfonat. Sie werden üblicherweise in Mengen von 0,05 bis 10 Gew.-%, bezogen auf das TPU, verwendet. Danach wird der Reaktor verschlossen und der Reaktorinhalt auf eine Imprägniertemperatur von üblicherweise mindestens 100 °C erhitzt. Das Treibmittel kann dabei vor, während oder nach dem Aufheizen des Reaktorinhalts zugefügt werden. Die Imprägniertemperatur sollte im Bereich der Erweichungstemperatur des TPU liegen. Es sind Imprägniertemperaturen von 100 bis 150, insbesondere 110 bis 145 °C bevorzugt.

Je nach Menge und Art des Treibmittels sowie nach der Höhe der Temperatur stellt sich im verschlossenen Reaktor ein Druck (Imprägnierdruck) ein, der im Allgemeinen 2 bis 100 bar (absolut) beträgt. Erforderlichenfalls kann der Druck durch ein Druckregelventil oder Nachpressen von Treibmittel reguliert werden. Bei den Imprägnierbedingungen, d.h. erhöhte Temperatur und Überdruck, diffundiert Treibmittel in die Polymergranulatpartikel hinein. Die Imprägnierdauer beträgt im Allgemeinen 0,5 bis 10 Stunden. Anschließend wird heiß schlagartig entspannt. Beim Entspannen expandiert das zuvor in die TPU-Partikel diffundierte Treibmittel "explosionsartig" und schäumt die erweichten Partikel auf.

Üblicherweise wird die Suspension durch eine Düse, ein Ventil oder eine andere geeignete Vorrichtung entspannt. Man kann die Suspension unmittelbar auf Atmosphärendruck, beispielsweise 1013 mbar, entspannen. Bevorzugt wird jedoch in einen Zwischenbehälter entspannt, dessen Druck zum Aufschäumen der TPU-Partikel ausreicht, jedoch über dem Atmosphärendruck liegen kann. Geeigneterweise entspannt man auf einen Druck von z.B. 0,5 bis 5, insbesondere 1 bis 3 bar (absolut). Während des Entspannens kann man im Imprägnierbehälter den Imprägnierdruck konstant halten, indem man Treibmittel oder Inertgas (z.B. Stickstoff) nachpresst. Dabei werden expandierte TPU-Partikel erhalten, die schließlich in üblicher Weise aus der Suspension abgetrennt werden. Anhaftendes Wasser wird in der Regel durch Trocknen z.B. im Stromtrockner, entfernt. Falls erforderlich kann anhaftendes Suspensionshilfsmittel entfernt e-werden, indem die Partikel mit einem geeigneten Reagens behandelt werden, beispielsweise mit einer Säure wie Salpetersäure, Salzsäure oder Schwefelsäure, um säurelösliche Suspensionshilfsmittel, z.B. Metallcarbonate oder Tricalciumphosphat, zu entfernen.

Im Rahmen der vorliegenden Erfindung ist es auch möglich, Mischungen verschiedener Treibmittel einzusetzen, insbesondere Mischungen enthaltend mindestens ein verkapseltes Treibmittel und mindestens ein chemisches Treibmittel oder Mischungen enthaltend mindestens ein verkapseltes Treibmittel und mindestens ein physikalisches Treibmittel.

Das Verfahren gemäß Schritt (a) kann prinzipiell unter an sich bekannten Reaktionsbedingungen durchgeführt werden.

Die mittels des erfindungsgemäßen Verfahrens erhaltenen thermoplastischen Polyurethane werden erfindungsgemäß zu einem Formkörper (FK*) verarbeitet. Das erfindungsgemäße Verfahren umfasst demgemäß Schritt (a) und die Schritte (b) bis (e). Erfindungsgemäß kann das Verfahren weitere Schritte, beispielsweise Temperaturbehandlungen, umfassen. Bevorzugt weist das erfindungsgemäße Verfahren jedoch genau die Schritte (a) bis (e) ohne weitere Zwischenschritte auf.

Gemäß einer weiteren Ausführungsform betrifft die vorliegende Erfindung ein Verfahren wie zuvor beschrieben, wobei der Formkörper (FK) durch Erwärmen auf eine Temperatur oberhalb der Schalttemperatur eine Rückstellung erfährt.

Mit dem erfindungsgemäßen Verfahren wird ein Formkörper (FK) erhalten, der einen Formgedächtnis-Effekt aufweist. Gemäß einem weiteren Aspekt betrifft die vorliegende Erfindung auch Formkörper, erhältlich oder erhalten gemäß einem Verfahren wie zuvor beschrieben, wobei der Formkörper ein Schaum ist.

Prinzipiell kann es sich bei dem Formkörper (FK) um Körper aller möglichen Formen handeln, beispielsweise um Platten, Schläuche. Folien, Dichtbänder, Profile oder Zuschnitte von Schäumen allgemein, beispielsweise Partikelschäume oder Extrusionsschäume.

Bevorzugt ist der erfindungsgemäße Formkörper ein poröser Formkörper, bevorzugt mit einer Dichte im Bereich von 20 g/l bis 1000 g/l, weiter bevorzugt im Bereich von 50 g/l bis 500 g/l.

Die erfindungsgemäß erhältlichen bzw. erhaltenen Formkörper eignen sich beispielsweise als expandierbare Dichtungen. Dabei wird der nicht expandierte Formkörper in eine Kavität eingelegt oder eingeklebt wird und durch Wärmezufuhr expandiert. Demgemäß betrifft die vorliegende Erfindung auch die Verwendung eines erfindungsgemäßen Formkörpers als Dichtung in der Bauindustrie, im Geräte- und Fahrzeugbau und der Elektroindustrie.

Weiter eignen sich die erfindungsgemäß erhältlichen bzw. erhaltenen Formkörper auch als aktive Schaltelemente. Dabei wird bei Erreichen der Schalttemperatur durch die Expansion des Formkörpers beispielsweise eine mechanische und / oder elektrische Signalkette auslösen.

Demgemäß betrifft die vorliegende Erfindung auch die Verwendung eines erfindungsgemäßen Formkörpers als aktives Schaltelement.

Weiter betrifft die vorliegende Erfindung auch die Verwendung eines thermoplastischen Polyurethans zur Herstellung eines erfindungsgemäßen Formkörpers. Gemäß einer weiteren Ausführungsform betrifft die vorliegende Erfindung demgemäß die Verwendung eines thermoplastischen Polyurethans zur Herstellung eines Formkörpers, der einen Formgedächtnis-Effekt in einem Temperaturbereich von 0 °C bis 120 °C aufweist und sich in mindestens einer Dimension ausdehnen kann, wobei das thermoplastische Polyurethan erhältlich oder erhalten ist durch Umsetzung von mindestens den Komponenten (i) bis (iii):
(i) eine Polyisocyanatzusammensetzung;
(ii) mindestens ein Kettenverlängerer; und
(iii) mindestens eine Polyolzusammensetzung,
   wobei die Polyolzusammensetzung mindestens ein Bisphenol-Derivat umfasst, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist,
   und ein Polyol ausgewählt aus der Gruppe bestehend aus Polyetherolen, Polyesterolen, Polycarbonatalkoholen und Hybridpolyolen,
wobei der Formkörper ein Schaum ist, und
wobei der gemäß (ii) eingesetzte Kettenverlängerer ein Diol mit einem Molekulargewicht Mw < 220 g/mol ist.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Im Folgenden sind beispielhafte Ausführungsformen der vorliegenden Erfindung aufgeführt, wobei diese die vorliegende Erfindung nicht einschränken. Insbesondere umfasst die vorliegende Erfindung auch solche Ausführungsformen, die sich aus den im Folgenden angegebenen Rückbezügen und damit Kombinationen ergeben.
1. Verfahren zur Herstellung eines Formkörpers (FK) umfassend die folgenden Schritte
   (a) Herstellung eines thermoplastischen Polyurethans umfassend die Umsetzung
      (i) mindestens einer Polyisocyanatzusammensetzung;
      (ii) mindestens eines Kettenverlängerers; und
      (iii) mindestens einer Polyolzusammensetzung,
         wobei die Polyolzusammensetzung mindestens ein Bisphenol-Derivat umfasst, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist, und
         ein Polyol ausgewählt aus der Gruppe bestehend aus Polyetherolen, Polyesterolen, Polycarbonatalkoholen und Hybridpolyolen;
   (b) Herstellung eines Formkörpers (FK*) aus dem thermoplastischen Polyurethan,
   (c) Erwärmen des Formkörpers (FK*) auf eine Temperatur unterhalb der Temperatur, bei der eine permanente Verformbarkeit des Formkörpers (FK*) gegeben ist, und oberhalb der Schalttemperatur des thermoplastischen Polyurethans,
   (d) Komprimieren des erwärmten Formkörpers (FK*) unter Erhalt eines Formkörpers (FK),
   (e) Abkühlen des Formkörpers (FK) auf eine Temperatur unterhalb der Schalttemperatur des thermoplastischen Polyurethans,
      wobei der Formkörper ein Schaum ist, und
      wobei der gemäß (ii) eingesetzte Kettenverlängerer ein Diol mit einem Molekulargewicht Mw < 220 g/mol ist.
2. Verfahren gemäß Ausführungsform 1, wobei das thermoplastische Polyurethan ein Partikelschaum oder ein Extrusionsschaum ist.
3. Verfahren gemäß einer der Ausführungsformen 1 oder 2, wobei der Beginn der permanenten Verformbarkeit dem Beginn des Schmelzens der Hartphase des thermoplastischen Polyurethans entspricht, und die Schalttemperatur dem Beginn des in der Temperatur am höchsten liegenden Phasenüberganges vor dem Schmelzbereich entspricht.
4. Verfahren gemäß einer der Ausführungsformen 1 bis 3, wobei die Schalttemperatur des thermoplastischen Polyurethans (T_{schalt}) im Bereich von 0 bis 120 °C liegt.
5. Verfahren gemäß einer der Ausführungsformen 1 bis 4, wobei die Ausdehnung des gemäß Schritt (d) erhaltenen Formkörpers (FK) in mindestens einer Dimension höchstens 75 % der Ausdehnung des Formkörpers (FK*) beträgt.
6. Verfahren gemäß einer der Ausführungsformen 1 bis 5, wobei der gemäß (i) eingesetzte Kettenverlängerer und das in der Polyolzusammensetzung enthaltene Bisphenol-Derivat in einem molaren Verhältnis von 40 zu 1 bis 1 zu 10 eingesetzt werden.
7. Verfahren gemäß einer der Ausführungsformen 1 bis 6, wobei das mindestens eine Bisphenol-Derivat die folgende allgemeine Formel (I) aufweist: 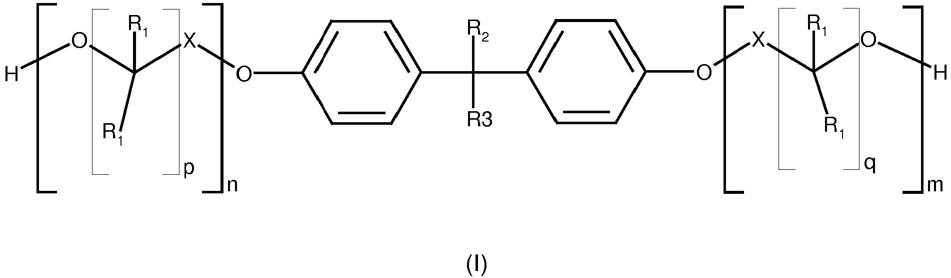 wobei
   R1 jeweils unabhängig voneinander eine Methylgruppe oder H ist,
   R2 und R3 eine Methylgruppe sind oder
   R2 -C- R3 zusammen O=S=O sind,
   X eine -C(R1)₂-, -C(R1)₂-C(R1)₂- oder -C(R1)₂-C(R1)₂-C(R1)₂- -Gruppe darstellt,
   p und q unabhängig voneinander eine ganze Zahl von 1 bis 4 sind, und
   n und m unabhängig voneinander eine ganze Zahl > 0 sind.
8. Verfahren gemäß einer der Ausführungsformen 1 bis 7, wobei das mindestens eine Bisphenol-Derivat nur primäre OH-Gruppen aufweist.
9. Verfahren gemäß einer der Ausführungsformen 1 bis 8, wobei das Polyisocyanat ein aromatisches Diisocyanat ist.
10. Verfahren gemäß einer der Ausführungsformen 1 bis 8, wobei das Polyisocyanat ein aliphatisches Diisocyanat ist.
11. Verfahren gemäß einer der Ausführungsformen 1 bis 10, wobei der Formkörper (FK) durch Erwärmen auf eine Temperatur oberhalb der Schalttemperatur eine Rückstellung erfährt.
12. Formkörper, erhältlich oder erhalten gemäß einem Verfahren gemäß einer der Ausführungsformen 1 bis 13, wobei der Formkörper ein Schaum ist.
13. Verwendung eines Formkörpers gemäß Ausführungsform 12 als Dichtung in der Bauindustrie, im Geräte- und Fahrzeugbau und der Elektroindustrie.
14. Verwendung eines Formkörpers gemäß Ausführungsform 12 als aktives Schaltelement.
15. Verwendung eines thermoplastischen Polyurethans zur Herstellung eines Formkörpers, der einen Formgedächtnis-Effekt in einem Temperaturbereich von 0 °C bis 120 °C aufweist und sich in mindestens einer Dimension ausdehnen kann, wobei das thermoplastische Polyurethan erhältlich oder erhalten ist durch Umsetzung von mindestens den Komponenten (i) bis (iii):
   (i) eine Polyisocyanatzusammensetzung;
   (ii) mindestens ein Kettenverlängerer; und
   (iii) mindestens eine Polyolzusammensetzung,
      wobei die Polyolzusammensetzung mindestens ein Bisphenol-Derivat umfasst, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist,
      und ein Polyol ausgewählt aus der Gruppe bestehend aus Polyetherolen, Polyesterolen, Polycarbonatalkoholen und Hybridpolyolen,
      wobei der Formkörper ein Schaum ist, und
      wobei der gemäß (ii) eingesetzte Kettenverlängerer ein Diol mit einem Molekulargewicht Mw < 220 g/mol ist.

Die nachfolgenden Beispiele dienen der Veranschaulichung der Erfindung, sind aber in keiner Weise einschränkend hinsichtlich des Gegenstands der vorliegenden Erfindung.

### BEISPIELE

### Folgende Einsatzstoffe wurden eingesetzt:

- Polyol 1:: Polyetherpolyol mit einer OH- Zahl von 113,3 und ausschließlich Primären OH- Gruppen (basierend auf Tetramethylenoxid, Funktionalität: 2)
- Polyol 2:: Bisphenol A- gestartetes Polyetherpolyol mit einer OH- Zahl von 313 und ausschließlich primären OH- Gruppen, Funktionalität: 2
- Polyol 3:: Polyesterpolyol auf Basis Adipinsäure MEG mit MW 470 g/mol und einer OH-Zahl von 240, Funktionalität: 2
- Isocyanat 1:: aliphatisches Isocyanat (4,4' Methylendicyclohexyldiisocyanat)
- Isocyanat 2:: aromatisches Isocyanat (4,4' Methylendiphenyldiisocyanat)
- KV:: 1,4- Butandiol
- Katalysator 1:: Zinn-II-isooctoat (50 %ig in Dioktyladipat)
- Stabilisator 1:: Sterisch gehindertes Phenol
- Additiv1:: Ester Wachs

### 1. Allgemeines Herstellbeispiel

Die Polyole wurden bei 80 °C in einem Behälter vorgelegt und mit den Komponenten gemäß Tabelle 1 und Tabelle 2 unter starkem Rühren vermischt. Die Reaktionsmischung erhitzte sich auf über 110 °C und wurde dann auf einen beheizten, teflonbeschichteten Tisch ausgegossen. Die erhaltene Gießschwarte wurde 15 Stunden bei 80 °C getempert, anschließend granuliert. Das resultierende Stranggranulat hatte ein Partikelgewicht von 34 - 37 mg.

**Tabelle 1**

| Nummer | Vergleich 1 | Beispiel 1 | Beispiel 2 | Beispiel 3 | Beispiel 4 | Beispiel 5 | Beispiel 6 |
|---|---|---|---|---|---|---|---|
| Polyol 1 [g] | 700 | 490 | 280 | 970 | 900 | 800 | 700 |
| Polyol 2 [g] | 0 | 210 | 420 | 30 | 100 | 200 | 300 |
| Polyol 3 [g] | 0 | 0 | 0 | 0 | 0 | 0 | 0 |
| Isocyanat 1 [g] | 588,00 | 675,3 | 763,39 | | | | |
| Isocyanat 2 [g] | | | | 510,18 | 533,93 | 567,85 | 601,78 |
| | | | | | | | |
| KV [g] | 183,33 | 147,72 | 151,91 | 90,56 | 91,99 | 94,02 | 96,06 |
| Katalysator 1 | 571 µL | 609 µL | 646 µL | | | | |
| | | | | | | | |
| Stabilisator 1 [g] | 7,18 | 7,67 | | 16,16 | 16,42 | 16,78 | 17,14 |
| Additiv 1 [g] | 2,87 | 3,07 | | | | | |
| | | | | | | | |
| Kennzahl | 1000 | 1000 | 1020 | 1000 | 1000 | 1000 | 1000 |
| Hartsegmentgehalt | 37,90% | 37,90% | 36,78% | 21,37% | 21,37% | 21,37% | 21,37% |
| Starttemperatur | 80 °C | 80 °C | 80 °C | 80 °C | 80 °C | 80 °C | 80 °C |
| Abgusstemperatur | 110 °C | 110 °C | 110 °C | 110 °C | 110 °C | 110 °C | 110 °C |
| Zeit 80°-110°C | 3 min | 3 min 30 sec | 7 min | 1 min 05 sec | 1 min 00 sec | 51 sec | 44 sec |

**Tabelle 2**

| Nummer | Vergleich 2 | Beispiel 7 | Vergleich 3 |
|---|---|---|---|
| Polyol 1 [g] | 800 | 320 | 623,08 |
| Polyol 2 [g] | 0 | 480 | 0 |
| Polyol 3 [g] | 0 | 0 | 127 |
| Isocyanat 1 [g] | | | |
| Isocyanat 2 [g] | 400 | 561,31 | 690 |
| | | | |
| KV [g] | 71,32 | 80,91 | 157,40 |
| Katalysator 1 | 571 µL | 609 µL | 646 µL |
| | | | |
| Stabilisator 1 [g] | 12,84 | 14,57 | 16,14 |
| Additiv 1 [g] | | | |
| | | | |
| Kennzahl | 1000 | 1000 | 1000 |
| Hartsegmentgehalt | 21,20% | 21,20% | 37,87% |
| Starttemperatur | 80 °C | 80 °C | 80 °C |
| Abgusstemperatur | 110 °C | 110 °C | 110 °C |
| Zeit 80°-110 °C | 1 min 05 sec | 42 sec | 1 min 21 sec |

Aus den Proben wurden Schaumkörper mittels Partikelschaumexpansion und anschließender Dampfverschweißung oder Schaumextrusion hergestellt.

### 2. Herstellung der Schaumpartikel nach dem Suspensionsverfahren

Die Versuche wurden mit einem Kesselfüllgrad von 80 % durchgeführt.

100 Gewichtsteile (entsprechend 27,5 Gew.-%, bezogen auf die gesamte Suspension ohne Treibmittel) des Granulats, 257 Gewichtsteile (entsprechend 70,6 Gew.-%, bezogen auf die gesamte Suspension ohne Treibmittel) Wasser, 6,7 Gewichtsteile (entsprechend 1,8 Gew.-%, bezogen auf die gesamte Suspension ohne Treibmittel) Calciumcarbonat, 0,13 Gewichtsteile (entsprechend 0,04 Gew.-%, bezogen auf die gesamte Suspension ohne Treibmittel) einer oberflächenaktiven Substanz und 24 Gewichtsteile Butan als Treibmittel (24 % bezogen auf die eingesetzte Granulatmenge) wurden unter Rühren erhitzt. Dann wurde bei 50 °C der Flüssigphase zusätzlich Stickstoff aufgepresst und der Innendruck auf 8 bar eingestellt. Anschließend wird bei Erreichen der Imprägniertemperatur (IMT) von 125 °C über eine Entspannungsvorrichtung entspannt.

Die anhaftenden Suspensionshilfsmittel (Calciumcarbonat und Tensid) werden anschließend mit verdünnter Salpetersäure entfernt, die Schaumstoffpartikel mit VE-Wasser gewaschen und anschließend getrocknet.

Die resultierende Schüttdichte (SD) wurde im Anschluss festgestellt.

**Tabelle 3**

| **Probe** | **Nach Suspensionsverfahren hergestellt** | **Erhaltene Schüttdichte [g/l]** |
|---|---|---|
| Vergleich 2 | + | 89 |
| Beispiel 3 | + | 89 |
| Beispiel 4 | + | 84 |
| Beispiel 5 | + | 86 |
| Beispiel 6 | + | 86 |

### 3. Herstellung der Formteile

Die gemäß der vorhergehenden Beschreibung hergestellten Schaumpartikel wurden unter Druck und Verdichtung in eine vorgeheizte Form eingefüllt. Diese wurde wechselseitig mit Wasserdampf von 1,0 bis 4,0 bar, also bei Temperaturen von 100 °C bis 140 °C, beheizt.

Anschließend wurde der Druck in der Form abgebaut, diese mit Wasser bzw. Luft gekühlt, geöffnet und das mechanisch stabile Formteil entnommen.

### 4. Herstellung eines Extrusionsschaumes

Die in Tabelle 5 genannten Rezepturen wurden mittels der unten beschriebenen Extrusionsanlage unter Zusatz der Treibmittel Treib1 und Treib2 zu ca. 2mm dicken Schaumfolien verarbeitet.

8 Schaumfolien Streifen wurden anschließend zu einer Dicke von 1,5 cm gestapelt und mittels PU Binder fixiert. An diesen Platten wurde das Expansionsverhalten bestimmt.
- Treib1:: Konzentrat aus Natriumhydrogencitrat (32 %) und Natriumhydrogencarbonat (24 %) in Ethylen-Vinylacetat-Copolymer (EVA)
- Treib2:: PS/SAN-Mikrospheren in EVA

### 5. Durchführung der Extrusion

Die in Tabelle 5 gekennzeichneten Proben wurden auf einem Brabender Einwellenextruder mit Flachfoliendüse zu Folien verarbeitet.

Vor der Extrusion wurden die Granulate mit 3 Gew.-% Treib1 und 9 Gew.-% Treib2 vermischt und als Dryblend extrudiert.
Extruder: Brabender Plasti-Corder PLE 331
L/D Verhältnis: L=25 D
Schneckendurchmesser: D=19mm
Kompressionsverhältnis der Schnecke: 3:1
Düse: Flachdüse
Extrusionsart: Folie

Die näheren Extrusionsbedingungen ergeben sich aus folgender Tabelle:

**Tabelle 4**

| Nr. | Temperaturprofil [°C] | | | | Z 5 | DM [Nm] | Bemerkungen |
|---|---|---|---|---|---|---|---|
| | Z 1 | 190 | Z 3 | Z 4 | | | |
| V1 | 200 | 210 | 210 | 190 | 190 | 5 | homogen |
| V2 | 200 | 200 | 200 | 180 | 180 | 10 | homogen |
| V3 | 210 | 210 | 210 | 190 | 190 | 6 | inhomogen, rauh |
| B1 | 210 | 215 | 215 | 200 | 200 | 5 | homogen geschäumt |
| B2 | 210 | 210 | 210 | 185 | 185 | 5 | homogen, steif |
| B6 | 200 | 210 | 210 | 180 | 180 | 8 | homogen |
| B7 | 210 | 210 | 210 | 190 | 190 | 4 | homogen, steif |

| | | | | | | | |
|---|---|---|---|---|---|---|---|
| DM = Drehmoment an der Schnecke | | | | | | | |

**Tabelle 5**

| **Probe** | **Nach dem Extrusionsverfahren hergestellt** | **Erhaltene Probendichte [g/l]** |
|---|---|---|
| Vergleich 1 | + | 280 |
| Vergleich 2 | + | 220 |
| Vergleich 3 | + | 250 |
| Beispiel 1 | + | 280 |
| Beispiel 2 | + | 250 |
| Beispiel 6 | + | 230 |
| Beispiel 7 | + | 290 |

### 6. Bestimmung des Expansionsverhaltens

15mm dicke Probekörper wurden 2h im Heizschrank bei 50 °C bzw. 70 °C aufgeheizt und heiß auf 7,5mm Dicke mittels einer Pressvorrichtung komprimiert. Die Probekörper wurden 12 Stunden in der Pressvorrichtung belassen und kühlten auf Raumtemperatur ab. Anschließend wurden die Probekörper der Vorrichtung entnommen, hierbei relaxierten sie auf die Probendicke 1 bei der sie über Tage stabil lagerbar waren. Zum Test des Rückstellverhaltens wurden die Probekörper 1 Minute lang in 90 °C warmes Wasser getaucht. Hierbei dehnten sich die erfindungsgemäßen Proben wieder auf die Dicke 2 aus.

**Tabelle 6: Relaxationsverhalten der Proben nach Tempern bei 50 °C**

| **Probe** | **Dicke 1 nach Komprimierung bei 50 °C und Abkühlung auf RT** | **Dicke 1 in % der Ausgangsdicke** | **Beobachtung in heißem Wasser** | **Expansion auf Dicke 2** | **Expansion von Dicke 1 auf Dicke 2 in % (Dicke1 =100%)** |
|---|---|---|---|---|---|
| Vergleich 1 Extrusion | 13 mm | 87% | Keine Expansion | | |
| Vergleich 2 Extrusion | 14 mm | 93% | Keine Expansion | | |
| Vergleich 2 Suspension | 14 mm | 93% | Keine Expansion | | |
| Vergleich 3 Extrusion | 12 mm | 80% | Keine Expansion | | |
| Beispiel 1 Extrusion | 12 mm | 80 % | Expansion | 14,5 mm | 121% |
| Beispiel 2 Extrusion | 12 mm | 80 % | Expansion | 15 mm | 125% |
| Beispiel 3 Suspension | 13 mm | 87% | leichte Expansion | 14 mm | 107% |
| Beispiel 4 Suspension | 12 mm | 80 % | Schnelle Expansion | 15 mm | 125% |
| Beispiel 5 Suspension | 11 mm | 73% | Schnelle Expansion | 15 mm | 136% |
| Beispiel 6 Suspension | 11 mm | 73% | langsame Expansion | 14 mm | 127% |
| Beispiel 6 Extrusion | 11 mm | 73% | langsame Expansion | 14 mm | 127% |
| Beispiel 7 Extrusion | 10 mm | 66% | langsame Expansion | 14 mm | 140% |

**Tabelle 7: Relaxationsverhalten der Proben nach Tempern bei 70 °C**

| **Probe** | **Dicke 1 nach Komprimierung bei 50 °C und Abkühlung auf RT** | **Dicke 1 in % der Ausgangsdicke** | **Beobachtung in heißem Wasser** | **Expansion auf Dicke 2** | **Expansion von Dicke 1 auf Dicke 2 in % (Dicke1**=100%) |
|---|---|---|---|---|---|
| Vergleich 1 Extrusion | 11 mm | 73% | Keine Expansion | | |
| Vergleich 2 Suspension | 12 mm | 80 % | Keine Expansion | | |
| Vergleich 2 Extrusion | 12 mm | 80 % | Keine Expansion | | |
| Vergleich 3 Extrusion | 10 mm | 66% | Keine Expansion | | |
| Beispiel 1 Extrusion | 11 mm | 73% | Expansion | 14 mm | 127% |
| Beispiel 2 Extrusion | 11 mm | 73% | Expansion | 15 mm | 136% |
| Beispiel 3 Suspension | 12 mm | 80 % | leichte Expansion | 13,5 mm | 112% |
| Beispiel 4 Suspension | 11 mm | 73% | Schnelle Expansion | 15 mm | 136% |
| Beispiel 5 Suspension | 11 mm | 73% | Schnelle Expansion | 15 mm | 136% |
| Beispiel 6 Suspension | 10 mm | 66% | Schnelle Expansion | 15 mm | 150% |
| Beispiel 6 Extrusion | 10 mm | 66% | Schnelle Expansion | 15 mm | 150% |
| Beispiel 7 Extrusion | 9 mm | 60% | Schnelle Expansion | 15 mm | 166% |

## Patentansprüche

1. Verfahren zur Herstellung eines Formkörpers (FK) umfassend die folgenden Schritte
(a) Herstellung eines thermoplastischen Polyurethans umfassend die Umsetzung
(i) mindestens einer Polyisocyanatzusammensetzung;
(ii) mindestens eines Kettenverlängerers; und
(iii) mindestens einer Polyolzusammensetzung,
wobei die Polyolzusammensetzung mindestens ein Bisphenol-Derivat umfasst, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist, und
ein Polyol ausgewählt aus der Gruppe bestehend aus Polyetherolen, Polyesterolen, Polycarbonatalkoholen und Hybridpolyolen;
(b) Herstellung eines Formkörpers (FK*) aus dem thermoplastischen Polyurethan,
(c) Erwärmen des Formkörpers (FK*) auf eine Temperatur unterhalb der Temperatur, bei der eine permanente Verformbarkeit des Formkörpers (FK*) gegeben ist, und oberhalb der Schalttemperatur des thermoplastischen Polyurethans,
(d) Komprimieren des erwärmten Formkörpers (FK*) unter Erhalt eines Formkörpers (FK),
(e) Abkühlen des Formkörpers (FK) auf eine Temperatur unterhalb der Schalttemperatur des thermoplastischen Polyurethans,
wobei der Formkörper ein Schaum ist,
wobei der gemäß (ii) eingesetzte Kettenverlängerer ein Diol mit einem Molekulargewicht Mw < 220 g/mol ist,
und wobei unter Schalttemperatur die Temperatur verstanden wird, bei der ein Phasenübergang unterhalb der Schmelztemperatur der Hartphase vorhanden ist.

2. Verfahren gemäß Anspruch 1, wobei das thermoplastische Polyurethan ein Partikelschaum oder ein Extrusionsschaum ist.

3. Verfahren gemäß einem der Ansprüche 1 oder 2, wobei der Beginn der permanenten Verformbarkeit dem Beginn des Schmelzens der Hartphase des thermoplastischen Polyurethans entspricht, und die Schalttemperatur dem Beginn des in der Temperatur am höchsten liegenden Phasenüberganges vor dem Schmelzbereich entspricht.

4. Verfahren gemäß einem der Ansprüche 1 bis 3, wobei die Schalttemperatur des thermoplastischen Polyurethans (T_{schalt}) im Bereich von 0 bis 120 °C liegt.

5. Verfahren gemäß einem der Ansprüche 1 bis 4, wobei die Ausdehnung des gemäß Schritt (d) erhaltenen Formkörpers (FK) in mindestens einer Dimension höchstens 75 % der Ausdehnung des Formkörpers (FK*) beträgt.

6. Verfahren gemäß einem der Ansprüche 1 bis 5, wobei der gemäß (i) eingesetzte Kettenverlängerer und das in der Polyolzusammensetzung enthaltene Bisphenol-Derivat in einem molaren Verhältnis von 40 zu 1 bis 1 zu 10 eingesetzt werden.

7. Verfahren gemäß einem der Ansprüche 1 bis 6, wobei das mindestens eine Bisphenol-Derivat die folgende allgemeine Formel (I) aufweist: 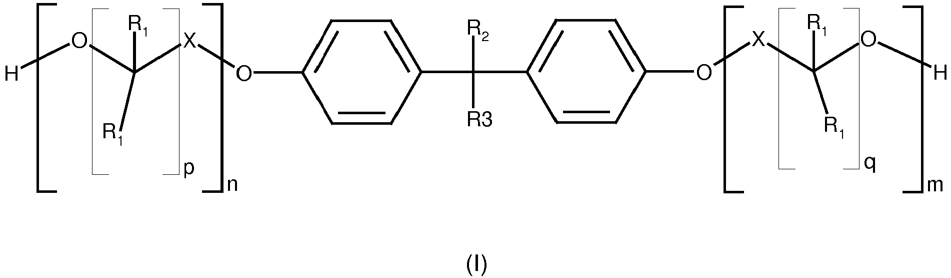 wobei
R1 jeweils unabhängig voneinander eine Methylgruppe oder H ist,
R2 und R3 eine Methylgruppe sind oder
R2 -C- R3 zusammen O=S=O sind,
X eine -C(R1)₂-, -C(R1)₂-C(R1)₂- oder -C(R1)₂-C(R1)₂-C(R1)₂- -Gruppe darstellt,
p und q unabhängig voneinander eine ganze Zahl von 1 bis 4 sind, und
n und m unabhängig voneinander eine ganze Zahl > 0 sind.

8. Verfahren gemäß einem der Ansprüche 1 bis 7, wobei das mindestens eine Bisphenol-Derivat nur primäre OH-Gruppen aufweist.

9. Verfahren gemäß einem der Ansprüche 1 bis 8, wobei das Polyisocyanat ein aromatisches Diisocyanat ist.

10. Verfahren gemäß einem der Ansprüche 1 bis 8, wobei das Polyisocyanat ein aliphatisches Diisocyanat ist.

11. Verfahren gemäß einem der Ansprüche 1 bis 10, wobei der Formkörper (FK) durch Erwärmen auf eine Temperatur oberhalb der Schalttemperatur eine Rückstellung erfährt.

12. Formkörper, erhältlich oder erhalten gemäß einem Verfahren gemäß einem der Ansprüche 1 bis 11, wobei der Formkörper ein Schaum ist.

13. Verwendung eines Formkörpers gemäß Anspruch 12 als Dichtung in der Bauindustrie, im Geräte- und Fahrzeugbau und der Elektroindustrie.

14. Verwendung eines Formkörpers gemäß Anspruch 12 als aktives Schaltelement.

15. Verwendung eines thermoplastischen Polyurethans zur Herstellung eines Formkörpers, der einen Formgedächtnis-Effekt in einem Temperaturbereich von 0 °C bis 120 °C aufweist und sich in mindestens einer Dimension ausdehnen kann, wobei das thermoplastische Polyurethan erhältlich oder erhalten ist durch Umsetzung von mindestens den Komponenten (i) bis (iii):
(i) eine Polyisocyanatzusammensetzung;
(ii) mindestens ein Kettenverlängerer; und
(iii) mindestens eine Polyolzusammensetzung,
wobei die Polyolzusammensetzung mindestens ein Bisphenol-Derivat umfasst, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist,
und ein Polyol ausgewählt aus der Gruppe bestehend aus Polyetherolen, Polyesterolen, Polycarbonatalkoholen und Hybridpolyolen,
wobei der Formkörper ein Schaum ist, und
wobei der gemäß (ii) eingesetzte Kettenverlängerer ein Diol mit einem Molekulargewicht Mw < 220 g/mol ist.

## Claims

1. A process for producing a molding (FK), comprising the following steps:
(a) preparing a thermoplastic polyurethane, comprising the reaction of
(i) at least one polyisocyanate composition;
(ii) at least one chain extender; and
(iii) at least one polyol composition,
the polyol composition comprising at least one bisphenol derivative selected from the group consisting of bisphenol A derivatives having a molecular weight Mw > 315 g/mol and bisphenol S derivatives having a molecular weight Mw > 315 g/mol, at least one of the OH groups of the bisphenol derivative being alkoxylated, and
a polyol selected from the group consisting of polyetherols, polyesterols, polycarbonate alcohols and hybrid polyols;
(b) producing a molding (FK*) from the thermoplastic polyurethane,
(c) heating the molding (FK*) to a temperature below the temperature at which the molding (FK*) is permanently deformable, and above the switching temperature of the thermoplastic polyurethane,
(d) compressing the heated molding (FK*) to give a molding (FK),
(e) cooling the molding (FK) to a temperature below the switching temperature of the thermoplastic polyurethane,
wherein the molding is a foam,
wherein the chain extender used in (ii) is a diol having a molecular weight Mw < 220 g/mol,
and wherein switching temperature refers to the temperature at which there is a phase transition below the melting temperature of the hard phase.

2. The process according to claim 1, wherein the thermoplastic polyurethane is a bead foam or an extruded foam.

3. The process according to either of claims 1 and 2, wherein the beginning of permanent deformability corresponds to the beginning of melting of the hard phase of the thermoplastic polyurethane, and the switching temperature corresponds to the beginning of the phase transition highest in terms of temperature before the melting range.

4. The process according to any of claims 1 to 3, wherein the switching temperature of the thermoplastic polyurethane (T_{switch}) is in the range from 0 to 120°C.

5. The process according to any of claims 1 to 4, wherein the extent of the molding (FK) obtained in step (d) in at least one dimension is not more than 75% of the extent of the molding (FK*).

6. The process according to any of claims 1 to 5, wherein the chain extender used in (i) and the bisphenol derivative present in the polyol composition are used in a molar ratio of 40:1 to 1:10.

7. The process according to any of claims 1 to 6, wherein the at least one bisphenol derivative has the following general formula (I): 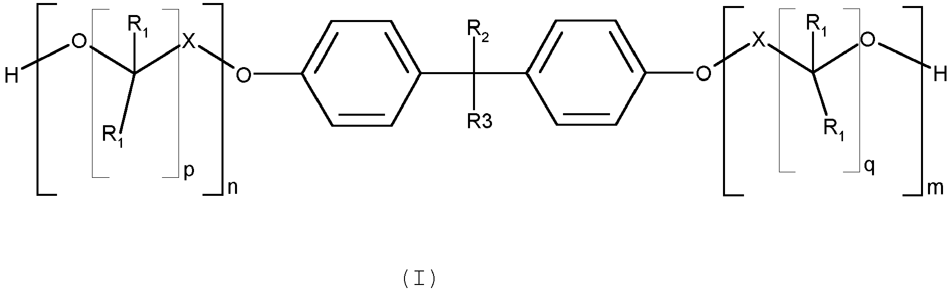 where
R1 independently at each occurrence is a methyl group or H,
R2 and R3 are a methyl group, or
R2 -C- R3 together are O=S=O,
X is a group -C(R1)₂-, -C(R1)₂-C(R1)₂- or -C(R1)₂-C(R1)₂-C(R1)₂-,
p and q independently of one another are an integer from 1 to 4, and
n and m independently of one another are an integer > 0.

8. The process according to any of claims 1 to 7, wherein the at least one bisphenol derivative contains only primary OH groups.

9. The process according to any of claims 1 to 8, wherein the polyisocyanate is an aromatic diisocyanate.

10. The process according to any of claims 1 to 8, wherein the polyisocyanate is an aliphatic diisocyanate.

11. The process according to any of claims 1 to 10, wherein the molding (FK) undergoes restoration by heating to a temperature above the switching temperature.

12. A molding obtainable or obtained by a process according to any of claims 1 to 11, wherein the molding is a foam.

13. The use of a molding according to claim 12 as a seal in the construction industry, in apparatus construction and vehicle construction, and in the electrical industry.

14. The use of a molding according to claim 12 as an active switching element.

15. The use of a thermoplastic polyurethane for producing a molding which exhibits a shape memory effect in a temperature range from 0°C to 120°C and is able to expand in at least one dimension, the thermoplastic polyurethane being obtainable or obtained by reaction of at least components (i) to (iii):
(i) a polyisocyanate composition;
(ii) at least one chain extender; and
(iii) at least one polyol composition,
the polyol composition comprising at least one bisphenol derivative selected from the group consisting of bisphenol A derivatives having a molecular weight Mw > 315 g/mol and bisphenol S derivatives having a molecular weight Mw > 315 g/mol, at least one of the OH groups of the bisphenol derivative being alkoxylated,
and a polyol selected from the group consisting of polyetherols, polyesterols, polycarbonate alcohols and hybrid polyols,
wherein the molding is a foam, and
wherein the chain extender used in (ii) is a diol having a molecular weight Mw < 220 g/mol.

## Revendications

1. Procédé pour la préparation d'un corps moulé (FK) comprenant les étapes suivantes
(a) préparation d'un polyuréthane thermoplastique comprenant la transformation
(i) d'au moins une composition de polyisocyanate ;
(ii) d'au moins un agent d'extension de chaînes ; et
(iii) d'au moins une composition de polyol, la composition de polyol comprenant au moins un dérivé de bisphénol, choisi dans le groupe constitué par des dérivés de bisphénol A dotés d'un poids moléculaire Mw > 315 g/mole et des dérivés de bisphénol S dotés d'un poids moléculaire Mw > 315 g/mole, au moins un des groupes OH du dérivé de bisphénol étant alcoxylé, et
un polyol choisi dans le groupe constitué par des polyétherols, des polyesterols, des polycarbonate-alcools et des polyols hybrides ;
(b) préparation d'un corps moulé (FK*) à partir du polyuréthane thermoplastique,
(c) chauffage du corps moulé (FK*) à une température inférieure à la température à laquelle une déformabilité permanente du corps moulé (FK*) est donnée, et supérieure à la température de commutation du polyuréthane thermoplastique,
(d) compression du corps moulé (FK*) chauffé avec obtention d'un corps moulé (FK),
(e) refroidissement du corps moulé (FK) à une température inférieure à la température de commutation du polyuréthane thermoplastique,
le corps moulé étant une mousse,
l'agent d'extension de chaînes utilisé selon (ii) étant un diol doté d'un poids moléculaire Mw < 220 g/mole,
et par « température de commutation », on n'entend la température à laquelle une transition de phase est présente en dessous de la température de fusion de la phase dure.

2. Procédé selon la revendication 1, le polyuréthane thermoplastique étant une mousse à particules ou une mousse d'extrusion.

3. Procédé selon l'une quelconque des revendications 1 et 2, le début de la déformabilité permanente correspondant au début de la fusion de la phase dure du polyuréthane thermoplastique, et la température de commutation correspondant au début de la transition de phase la plus élevée dans la température avant le domaine de fusion.

4. Procédé selon l'une quelconque des revendications 1 à 3, la température de commutation du polyuréthane thermoplastique (T_{commutation}) se situant dans la plage de 0 à 120 °C.

5. Procédé selon l'une quelconque des revendications 1 à 4, la dilatation du corps moulé (FK) obtenu selon l'étape (d) dans au moins une dimension étant d'au plus 75 % de la dilatation du corps moulé (FK*).

6. Procédé selon l'une quelconque des revendications 1 à 5, l'agent d'extension de chaînes utilisé selon (i) et le dérivé de bisphénol contenu dans la composition de polyol étant utilisés en un rapport molaire de 40 sur 1 à 1 sur 10.

7. Procédé selon l'une quelconque des revendications 1 à 6, l'au moins un dérivé de bisphénol présentant la formule générale suivante (I) : 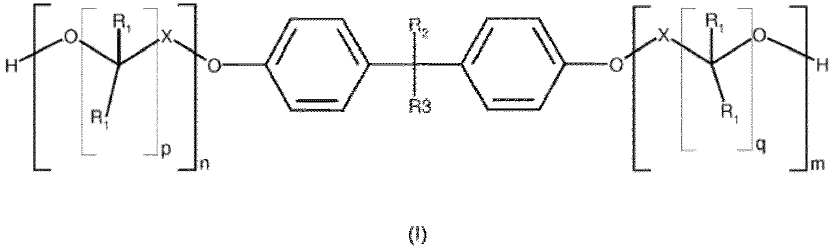
R1 étant à chaque fois indépendamment les uns des autres un groupe méthyle ou H,
R2 et R3 étant un groupe méthyle ou
R2-C-R3 étant ensemble O=S=O,
X représentant un groupe -C(R1)₂-, -C(R1)₂-C(R1)₂-ou -C(R1)₂-C(R1)₂-C(R1)₂-,
p et q étant indépendamment l'un de l'autre un nombre entier de 1 à 4, et
n et m étant indépendamment l'un de l'autre un nombre entier > 0.

8. Procédé selon l'une quelconque des revendications 1 à 7, l'au moins un dérivé de bisphénol ne présentant que des groupes OH primaire.

9. Procédé selon l'une quelconque des revendications 1 à 8, le polyisocyanate étant un diisocyanate aromatique.

10. Procédé selon l'une quelconque des revendications 1 à 8, le polyisocyanate étant un diisocyanate aliphatiques.

11. Procédé selon l'une quelconque des revendications 1 à 10, le corps moulé (FK) subissant un rétablissement par chauffage à une température supérieure à la température de commutation.

12. Corps moulé, pouvant être obtenu ou obtenu selon un procédé selon l'une quelconque des revendications 1 à 11, le corps moulé étant une mousse.

13. Utilisation d'un corps moulé selon la revendication 12 en tant qu'agent d'étanchéité dans l'industrie du bâtiment, dans la construction d'appareils et de véhicules et dans l'industrie électrique.

14. Utilisation d'un corps moulé selon la revendication 12 en tant qu'élément de commutation actif.

15. Utilisation d'un polyuréthane thermoplastique pour la préparation d'un corps moulé, qui présente un effet de mémoire de forme dans une plage de températures de 0 °C à 120 °C et qui peut se dilater dans au moins une dimension, le polyuréthane thermoplastique pouvant être obtenu ou étant obtenu par transformation d'au moins les composants (i) à (iii) :
(i) une composition de polyisocyanate ;
(ii) au moins un agent d'extension de chaînes ; et
(iii) au moins une composition de polyol,
la composition de polyol comprenant au moins un dérivé de bisphénol, choisi dans le groupe constitué par des dérivés de bisphénol A dotés d'un poids moléculaire Mw > 315 g/mole et des dérivés de bisphénol S dotés d'un poids moléculaire Mw > 315 g/mole, au moins un des groupes OH du dérivé de bisphénol étant alcoxylé,
et un polyol choisi dans le groupe constitué par des polyétherols, des polyesterols, des polycarbonate-alcools et des polyols hybrides,
le corps moulé étant une mousse, et
l'agent d'extension de chaînes utilisé selon (ii) étant un diol doté d'un poids moléculaire Mw < 220 g/mole.
